# EUROPÄISCHE PATENTANMELDUNG

(11) **EP 2 604 129 A1**
(43) Veröffentlichungstag der Anmeldung: **19.06.2013**
(21) Anmeldenummer: 12001715.7
(22) Anmeldetag: 14.03.2012
(51) Int. Cl.: A23L 3/36, A23L 3/375, F25D 3/12, F25D 3/14

(54) **Vorrichtung und Verfahren zur Temperaturhaltung**

(30) Priorität: 13.12.2011 DE 102011121013
(71) Anmelder: Linde Aktiengesellschaft, 80331 Munich (DE)
(72) Erfinder: Pallmann, Rayc, 21244 Buchholz (DE)
(74) Vertreter: Gellner, Bernd

(57) **Zusammenfassung**

Vorrichtung und Verfahren zur Temperaturhaltung von gekühlten Gütern, mit einer Kühlmittelkammer (10) in, welche mittels einer Unterteilung (14, 14a, 16) in zwei Bereiche (12, 14) unterteilt ist, wobei Kühlmittel unter Erzeugung von Kühlmittelschnee und Kühlmitteldampf in den ersten Bereich einführbar, und der Kühlmitteldampf über die Unterteilung in den zweiten Bereich, und über den zweiten Bereich aus der Kühlmittelkammer abführbar ist, ferner mit einer Öffnung (18) in der Kühlmittelkammer, über welche Kühlmittel in die Kühlmittelkammer einführbar und gleichzeitig Kühlmitteldampf aus der Kühlmittelkammer abführbar ist.

## Beschreibung

Die Erfindung betrifft eine Vorrichtung und ein Verfahren zur Temperaturhaltung von Gütern, insbesondere gekühlten Lebensmitteln.

Die Temperaturhaltung für gekühlte Lebensmittel ist zur Erhaltung der Qualität erforderlich, da in vielen Fällen eine gewünschte Lagertemperatur nicht überschritten werden darf. Das gilt in besonderem Masse auch für Lebensmitteltransporte, wobei für Transporte allgemein wichtige Kriterien wie geringes Transportgewicht und Unabhängigkeit von einer permanenten Energieversorgung hinzukommen. Darüber hinaus sind die Anforderungen an die Flexibilität einer solchen Temperaturhaltung bezüglich des Temperaturniveaus und der Lagerdauer stark angestiegen.

Üblicherweise werden zur Temperaturhaltung mit Trockeneis bestückte Container eingesetzt, die jedoch die Aufgabe der Temperaturhaltung nur in engen zeitlichen Grenzen auf einem festgelegten Temperaturniveau erfüllen können. Eine auf die gewünschte Lagerdauer abgestimmte Dosierung des Trockeneises ist aufgrund seiner Verfügbarkeit in Blöcken schwierig. Darüber hinaus kann es durch Einwirkung der Schmelze auf das Kühlgut zu unerwünschten Beeinträchtigungen der Lebensmittelqualität kommen.

Eine andere Methode zur Temperaturhaltung stellt die Kühlung unter Einsatz von Kohlendioxidschnee dar. Diese Methode wird beispielsweise bei der aus der US 5,511,379 bekannten Kühleinrichtung benutzt. Dabei wird flüssiges Kohlendioxid durch den Einsatz eines Düse-/Prallplattesystems in Kohlendioxidschnee und Kohlendioxidgas umgewandelt. Die Kühlung erfolgt durch den Energiebedarf der stattfindenden Sublimation des Kohlendioxidschnees und durch das dabei entstehende kalte Gas.

Aus der EP 1 048 228 B1 ist eine Vorrichtung zur Temperaturhaltung von gekühlten Lebensmitteln mit einem Doppelkammersystem bekannt, das aus einer Kühlmittelkammer und einer Außenkammer besteht. Die Außenkammer weist hierbei eine Begrenzungsfläche auf, deren Durchlässigkeit für Kühlmittelsublimat veränderlich ist, wobei diese Begrenzungsfläche das Doppelkammer-System von einer Ladungskammer trennt, die zu kühlenden Lebensmittel aufnimmt. Die Handhabung eines derartigen Doppelkammersystems wird als relativ aufwendig empfunden.

Der vorliegenden Erfindung liegt die Aufgabe zugrunde, eine Vorrichtung und ein Verfahren zur Temperaturhaltung von gekühlten Lebensmitteln zur Verfügung zu stellen, welches energetisch in günstiger Weise einsetzbar sowie leicht und gefahrlos handhabbar ist.

Diese Aufgabe wird erfindungsgemäß gelöst durch eine Vorrichtung mit den Merkmalen des Patentanspruchs 1 sowie ein Verfahren mit den Merkmalen des Patentanspruchs 12.

Mit der erfindungsgemäßen Vorrichtung zur Temperaturhaltung, welche eine Kühlmittelkammer mit einer einzigen Öffnung aufweist, ist ein einfaches, robustes und für einen Bediener leicht und sicher handhabbares System zur Verfügung gestellt, welches eine wirtschaftliche Kühlung von Gütern, insbesondere Lebensmitteln, in einer Ladekammer ermöglicht.

Vorteilhafte Ausgestaltungen der erfindungsgemäßen Vorrichtung sowie des erfindungsgemäßen Verfahrens sind Gegenstand der Unteransprüche.

Gemäß einer bevorzugten Ausgestaltung weist die erfindungsgemäße Vorrichtung eine mit der Öffnung der Kühlmittelkammer fluiddicht koppelbare Leitungseinrichtung auf, mittels der Kühlmittel über die Öffnung in den ersten Bereich der Kühlmittelkammer, und Kühlmitteldampf bzw. Abgas über die Öffnung aus dem zweiten Bereich der Kühlmittelkammer abführbar ist. Die Leitungseinrichtung ist bevorzugt als Schlauch oder Rohr ausgebildet. Durch diese Maßnahme ist es mittels Koppelung lediglich einer Leitung mit der Öffnung der Kühlmittelkammer möglich, Kühlmittel in die Kühlmittelkammer einzubringen sowie hierbei entstehenden Kühlmitteldampf ohne Belastung der Umgebung abzuführen.

Es ist hierbei besonders bevorzugt, dass die Leitungseinrichtung eine Ableitung zum Ableiten von Kühlmitteldampf und eine innerhalb dieser, insbesondere im Wesentlichen zu dieser konzentrisch, verlaufende Zuleitung zur Zuführung von Kühlmittel aufweist.

Eine derartige Anordnung der Zuleitung innerhalb der Ableitung erweist sich in der Praxis als besonders leicht handhabbar.

Vorteilhaft ist, dass das Ende der Ableitung mit einem an der Öffnung vorgesehenen Stutzen fluiddicht koppelbar ist, wobei hierbei der Endbereich der Zuleitung axial über das Ende der Ableitung hinausragt und sich durch den zweiten Bereich der Kühlmittelkammer hindurch in den ersten Bereich der Kühlmittelkammer erstreckt.

Zweckmäßigerweise ist der in den ersten Bereich der Kühlmittelkammer sich erstreckende Endbereich der Zuleitung mit wenigstens einer Düse ausgebildet, um Kühlmittel in die Kühlmittelkammer einzuleiten. Vorzugsweise sind mehrere derartige Düsen vorgesehen, welche mit in dem ersten Bereich ausgebildeten Prallplatten zusammenwirken. Hierdurch ist eine besonders effektive Umwandlung von Kühlmittel in Kühlmittelschnee bereitstellbar.

Es ist bevorzugt, dass zwischen dem ersten Bereich und zweiten Bereich der Kühlmittelkammer wenigstens bereichsweise ein Drahtgewebe ausgebildet ist, welches für Kühlmittelschnee undurchlässig, und für Kühlmitteldampf durchlässig ist. Mit dieser Maßnahme ist es in besonders einfacher und wirtschaftlicher Weise möglich, den entstehenden Kühlschnee vollständig im ersten Bereich zurückzuhalten, und den entstehenden Kühlmitteldampf über das Drahtgewebe, den zweiten Bereich und die mit dem zweiten Bereich verbundene Ableitung zu entfernen.

Zweckmäßigerweise ist das Drahtgewebe auf einem Lochblech ausgebildet. Ein derartiges Lochblech ist in einfacher Weise an der Innenseite der Kühlmittelkammer befestigbar, und stellt hierbei gleichzeitig ein Stabilisierungselement für die Kühlmittelkammer dar. Die Größe der Löcher des Lochbleches ist je nach konkreten Vorgaben wählbar. Es ist selbstverständlich möglich, lediglich die Löcher des Lochbleches mit Drahtgewebe zu bedecken. Es ist gleichfalls möglich, ein Drahtgewebe im Wesentlichen in der Gesamtgröße des Lochbleches vorzusehen, womit eine besonders einfache Herstellung des Verbundelements aus Lochblech und Drahtgewebe möglich ist. Lochblech und Drahtgewebe sind insbesondere mittels Punktschweißens miteinander verbindbar.

Es ist ferner bevorzugt, die Ableitung mit einer Absaugeinrichtung auszubilden. Hiermit ist entstehender Kühlmitteldampf in besonders sicherer Weise entfernbar.

Es ist besonders bevorzugt, dass nach Entfernung der mit der Öffnung der Kühlmittelkammer koppelbaren Leitung von der Öffnung in der Kühlmittelkammer entstehendes Kühlmittelsublimat über die Öffnung aus der Kühlmittelkammer abführbar ist. Insgesamt kann somit bei erfindungsgemäßer Ausbildung der Kühlmittelkammer über eine einzige Öffnung Kühlmittel in die Kühlmittelkammer eingebracht, sowie zunächst entstehender Kühlmitteldampf und anschließend zur Kühlung verwendbares Kühlmittelsublimat abgeführt werden. Dies stellt eine signifikante konstruktive Vereinfachung gegenüber herkömmlichen Lösungen dar.

Zweckmäßigerweise ist die Kühlmittelkammer in einem öffnenbaren und verschließbaren Thermobehälter angeordnet. In dem Thermobehälter ist auch die Ladungskammer ausgebildet, in der zu kühlendes Gut lagerbar ist. Zur Befüllung der Kühlmittelkammer mit Kühlmittel wird der Thermobehälter geöffnet, die Leitungseinrichtung mit der Öffnung der Kühlmittelkammer gekoppelt und Kühlmittel über eine entsprechende Einrichtung eingeführt. Anschließend kann die Leitungseinrichtung von der Öffnung entkoppelt, von der Kühlmittelkammer entfernt und der Thermobehälter wieder verschlossen werden. In diesem Zustand kann durch Sublimation des Kühlmittelschnees entstehendes Kühlmittelsublimat über das Drahtgitter von dem ersten Bereich in den zweiten Bereich der Kühlkammer übertreten und von dort über die Öffnung in die Ladungskammer.

### Figurenbeschreibung

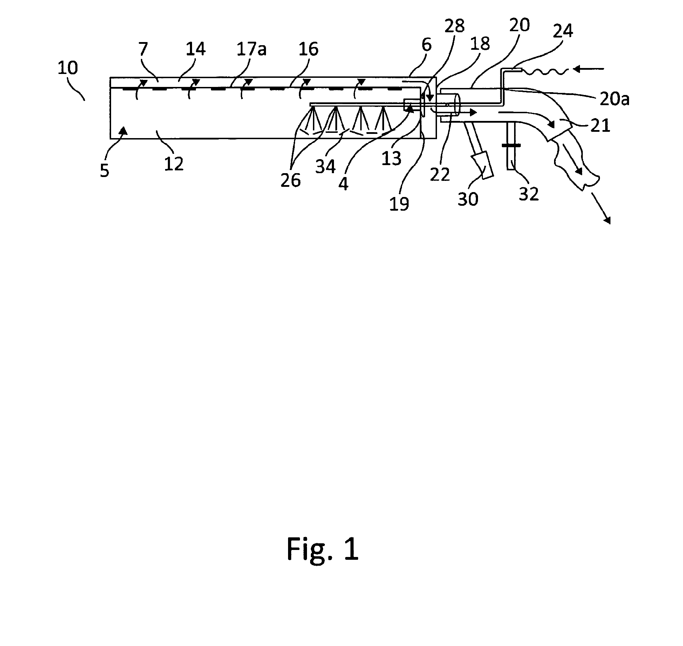

Eine bevorzugte Ausführungsform der Erfindung wird nun unter Bezugnahme auf die beigefügte Zeichnung weiter beschrieben. In dieser zeigt
- Figur 1: eine schematische seitliche Schnittansicht einer bevorzugten Ausführungsform der erfindungsgemäß verwendeten Kühlmittelkammer mit angeschlossnerer Leitungseinrichtung,
- Figur 2: eine schematische seitliche Schnittansicht einer in einem geschlossenen Thermobehälter positionierten Kühlmittelkammer nach Entfernung der Leitungseinrichtung von der Kühlmittelkammer, und
- Figur 3: eine explodierte perspektivische Ansicht einer bevorzugten Ausführungsform der erfindungsgemäß verwendbaren Kühlmittelkammer.

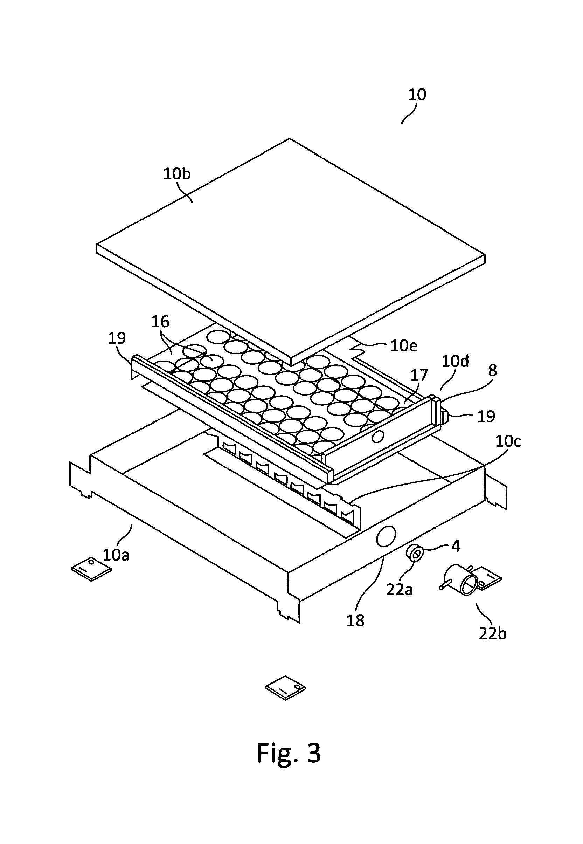

Eine erste bevorzugte Ausführungsform der erfindungsgemäß einsetzbaren Kühlmittelkammer ist in den Figuren mit 10 bezeichnet. Die Kühlmittelkammer weist einen ersten Bereich 12 und einen zweiten Bereich 14 auf. Die Bereiche 12, 14 sind mittels eines Lochbleches 17 und fluid-undurchlässigen Wandungselementen 19 voneinander getrennt (siehe Figur 3). Die Löcher 17a des Lochbleches 17 sind jeweils von einem Drahtgewebe bzw. -vlies 16 überdeckt. Der hierfür verwendete Draht ist bevorzugt ein Edelstahldraht. Die Elemente 14, 14a, 16 und gegebenenfalls 19 bilden somit eine Unterteilung der Kühlmittelkammer 10 zur Bereitstellung des ersten und des zweiten Bereiches dar.

Die Kühlmittelkammer 10 weist auf einer Seite eine Öffnung 18 auf. An die Öffnung 18 ist eine als Schlauch ausgebildete Leitungseinrichtung 20 fluiddicht anschließbar. Zweckmäßigerweise ist zu diesem Zwecke in der Öffnung 18 ein Kupplungsstutzen 22 vorgesehen.

Der Schlauch 20 weist eine Ableitung 21 und eine Zuleitung 24 auf. Die Ableitung 21 wird von der Wandung des Schlauches 20 gebildet, welche mit dem Stutzen 22 koppelbar ist. Die Zuleitung 24 ist über eine Öffnung 20a in der Wandung des Schlauches 20 in diesen eingeführt, und verläuft innerhalb des Schlauches 20 im Wesentlichen parallel zu diesem, d.h. in axialer Richtung des Schlauches. Das Ende der Zuleitung 24 ragt über das mit dem Stutzen 22 verbundene Ende der Ableitung bzw. des Schlauches 20 hinaus und erstreckt sich durch den Stutzen 22 hindurch über den zweiten Bereich 14 in den ersten Bereich 12 der Kühlmittelkammer. Der Endbereich der Zuleitung 24 ist mit einer Anzahl von Düsen 26 ausgebildet.

Zur Einführung der Zuleitung in den ersten Bereich 12 ist eines der Wandungselemente 19 mit einer Öffnung 13 ausgebildet, welche koaxial bzw. fluchtend zu der Öffnung 18 dem Stutzen 22 angeordnet ist. Zweckmäßigerweise ist auf der Außenseite der Zuleitung 24 eine diese umschließende Dichtungslippe 28 angeordnet, welche bei Positionierung des Endes der Zuleitung in dem ersten Bereich 12 die Öffnung 13 abdichtet.

Zur Handhabung des Schlauches 20 ist dieser mit zwei Griffelementen 30, 32 ausgebildet, so dass ein Benutzer durch Halten dieser Griffelemente den Schlauch 20 über den Stutzen 22 derart mit der Kühlmittelkammer 10 koppeln kann, dass der Schlauch 20 fluiddicht an dem Stutzen 22 anliegt, und der Endbereich der Zuleitung 24 unter Abdichtung des Loches 13 im ersten Bereich der Kühlmittelkammer 10 angeordnet ist.

Über die Zuleitung 24 eingedüstes Kühlmittel prallt, nach Durchgang durch die Düsen 26, auf in dem ersten Bereich 12 vorgesehene Prallplatten 34, wobei Kühlmittelschnee und Kühlmitteldampf entstehen. In der bevorzugten Ausführungsform wird als Kühlmittel Kohlendioxid eingesetzt, so dass Kohlendioxidschnee und Kohlendioxiddampf entstehen. Der entstehende Kühlmitteldampf (gasförmiges Kohlendioxid) strömt durch das Drahtgewebe 16 aus dem ersten Bereich 12 in den zweiten Bereich 14 und von dort über das Loch 18 bzw. den Stutzen 22 durch den als Abgasleitung dienenden Schlauch 20. Zweckmäßigerweise erfolgt in dem Schlauch 20 eine Absaugung des Kühlmitteldampfes z.B. mithilfe eines (nicht gezeigten) Gebläses. Der Schlauch 20 führt den bei der Befüllung der Kühlmittelkammer 10 entstehenden Kühlmitteldampf zweckmäßigerweise aus dem Gebäude, in dem die Vorrichtung eingesetzt wird, heraus.

Bei der Befüllung des ersten Bereiches 12 mit Kühlmittelschnee wird mittels der Wandungselemente 19 und dem Drahtgewebe 16 gleichzeitig dafür gesorgt, dass der Kühlmittelschnee vollständig im ersten Bereich 12 verbleibt und keinerlei Verluste entstehen. Nach Entfernung sämtlichen Kühlmitteldampfes kann der Schlauch 20 von der Kühlmittelkammer 10 entfernt werden. Hierbei kann zweckmäßigerweise ein Mechanismus vorgesehen sein, der auch bei Abwesenheit der Dichtlippe 28 die Öffnung 13 abdichtet.

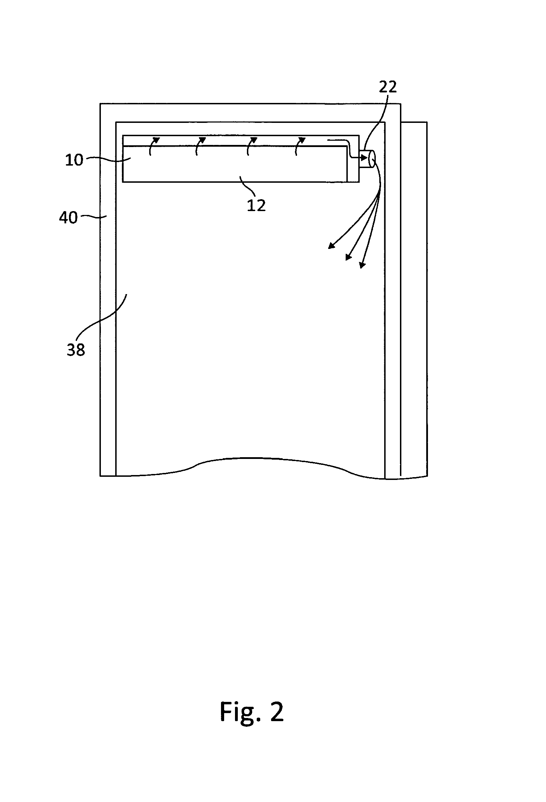

Der Betriebszustand bei entferntem Schlauch 22 ist in Figur 2 dargestellt, wobei hier die Kühlmittelkammer 10 innerhalb eines Thermobehälters 40 angeordnet dargestellt ist. Der Thermobehälter weist ferner eine Ladungskammer 38 auf, welche das zu kühlende Gut, insbesondere Lebensmittel, enthält. Der Thermobehälter 40 weist eine Tür 42 auf, mittels der er öffnenbar und verschließbar ist.

Die Befüllung des ersten Bereiches 12 der Kühlmittelkammer 10 mit Kühlmittel erfolgt zweckmäßigerweise bei geöffneter Tür 42.

Nach Entfernen des Schlauches 20 von der Kühlmittelkammer 10 und Schließen der Tür 42 erfolgt aufgrund der herrschenden Druck- und Temperaturverhältnisse eine Sublimation des Kühlmittelschnees innerhalb des ersten Bereiches 12. Hierbei entstehendes Sublimat (Kühlmittelgas) entweicht ebenfalls durch das Drahtgewebe 16 zunächst in den zweiten Bereich 14, und dann ebenfalls über die Öffnung 18 bzw. den Stutzen 22 in die Ladungskammer 38.

Bevorzugte konstruktive Einzelheiten der erfindungsgemäßen Kühlmittelkammer sind in Figur 3 dargestellt.

Die Kühlmittelkammer weist ein Kastenelement 10a und ein Deckelelement 10b auf. In einer Seitenwandung des Kastenelements 10a ist die Öffnung 18 ausgebildet. Auf dem Boden des Kastenelements 10a ist ein C-förmiges Halterungsblech 10c ausgebildet. An diesem Blech 10c ist das Lochblech 17 mit darauf vorgesehenem Drahtgewebe 16 befestigbar, wobei durch entsprechende Anordnung von Blech 10c und Lochblech 17 der erste und der zweite Bereich 12, 14 der Kühlmittelkammer 10 definierbar sind. An dem Lochblech 17 sind ferner die Wandungselemente 19 befestigbar. Dargestellt ist lediglich das Wandungselement 19, in welchem die Öffnung 28, durch welche der Endbereich der Leitungseinrichtung in die zweite Kammer einführbar ist, ausgebildet ist. Mittels der Wandungselemente 19, gegebenenfalls unter Verwendung des Bodens und/oder den Seitenwänden des Kastenelements 10a, ist der erste Bereich 12 bezüglich des zweiten Bereiches 14 der Kühlmittelkammer 10 definierbar. Zur weiteren Stabilisierung der Kühlmittelkammer kann zwischen Lochblech 17 und Deckelelement 10b ein weiteres C-Blech 10e vorgesehen sein.

Der Stutzen 22 besteht bevorzugt bevorzugt aus einem Messingring 22a, welcher unmittelbar in die Öffnung 18 einbringbar ist, und einem auf diesem fixierbaren Stutzenelement 22b. Weitere dargestellte Elemente, mittels der z. B. die Halterung der Kühlmittelkammer 10 in dem Thermobehälter 40 bewerkstelligt wird, sind nicht im Einzelnen erläutert.

## Patentansprüche

1. Vorrichtung zur Temperaturhaltung von gekühlten Gütern, mit einer Kühlmittelkammer (10), welche mittels einer Unterteilung (14, 14a, 16) in zwei Bereiche (12, 14) unterteilt ist, wobei Kühlmittel unter Erzeugung von Kühlmittelschnee und Kühlmitteldampf in den ersten Bereich einführbar, und der Kühlmitteldampf über die Unterteilung in den zweiten Bereich, und über den zweiten Bereich aus der Kühlmittelkammer abführbar ist, **gekennzeichnet durch** eine Öffnung (18) in der Kühlmittelkammer, über welche Kühlmittel in die Kühlmittelkammer einführbar und gleichzeitig Kühlmitteldampf aus der Kühlmittelkammer abführbar ist.

2. Vorrichtung nach Anspruch 1, **gekennzeichnet durch** eine mit der Öffnung (18) koppelbare Leitungseinrichtung (22) mittels der Kühlmittel über die Öffnung (18) in den ersten Bereich (12) der Kühlmittelkammer (10) einbringbar, und Kühlmitteldampf über die Öffnung (18) aus dem zweiten Bereich (14) der Kühlmittelkammer abführbar ist.

3. Vorrichtung nach Anspruch 2, **dadurch gekennzeichnet, dass** die Leitungseinrichtung (20) eine Ableitung zum Abführen von Kühlmitteldampf und eine innerhalb dieser verlaufende Zuleitung zum Einführen von Kühlmittel in die Kühlmittelkammer (10) aufweist.

4. Vorrichtung nach Anspruch 3, **dadurch gekennzeichnet, dass** der Endbereich der Ableitung mit einem an der Öffnung (18) vorgesehenen Stutzen (22) fluiddicht koppelbar ist, wobei hierbei die Zuleitung mit ihrem Endbereich sich durch den zweiten Bereich der Kühlmittelkammer (10) hindurch in den ersten Bereich der Kühlmittelkammer (10) erstreckt.

5. Vorrichtung nach Anspruch 4, **dadurch gekennzeichnet, dass** der sich in den ersten Bereich (12) der Kühlmittelkammer (10) erstreckende Bereich der Zuleitung mit wenigstens einer Düse (26) zur Einbringung von Kühlmittel in den ersten Bereich der Kühlmittelkammer ausgebildet ist.

6. Vorrichtung nach einem der vorstehenden Ansprüche, **dadurch gekennzeichnet, dass** zwischen dem ersten Bereich (12) und dem zweiten Bereich (14) als Unterteilung wenigstens bereits ein Drahtgewebe ausgebildet ist, welches für Kühlmittelschnee undurchlässig, und für Kühlmitteldampf durchlässig ist.

7. Vorrichtung nach Anspruch 6, **dadurch gekennzeichnet, dass** das Drahtgewebe auf einem Lochblech angeordnet ist.

8. Vorrichtung nach einem der vorstehenden Ansprüche, **gekennzeichnet durch** eine mit der Leitungseinrichtung (20) verbundene Absaugeinrichtung.

9. Vorrichtung nach einem der vorstehenden Ansprüche, **dadurch gekennzeichnet, dass** die Kühlmittelkammer zusammen mit einer Ladungskammer (38) in einem Thermobehälter (40) angeordnet ist.

10. Vorrichtung nach einem der vorstehenden Ansprüche, **dadurch gekennzeichnet, dass** nach Entfernung der mit der Öffnung (18) koppelbaren Leitungseinrichtung (20) von der Öffnung in der Kühlmittelkammer (10) entstehendes Kühlmittelsublimat über die Öffnung (18) aus der Kühlmittelkammer (10) in die Ladungskammer (38) überführbar ist.

11. Vorrichtung nach einem der vorstehenden Ansprüche, **dadurch gekennzeichnet, dass** der Thermobehälter mittels einer Tür (42) öffnenbar und verschließbar ist.

12. Verfahren zur Temperaturhaltung von gekühlten Gütern unter Verwendung einer Vorrichtung nach einem der vorstehenden Ansprüche, **gekennzeichnet durch** folgende Schritte:
- Einführung von Kühlmittel in die Kühlmittelkammer (10) **durch** die Öffnung (18), wobei der erste Bereich (12) mit hierbei entstehendem Kühlmittelschnee befüllt wird,
- gleichzeitiges Abführen von in ersten Bereich (12) entstehendem Kühlmitteldampf über die Unterteilung (16) zwischen dem ersten und dem zweiten Bereich, den zweiten Bereich (14) und die Öffnung (18) aus der Kühlmittelkammer (10).

13. Verfahren nach Anspruch 12, **dadurch gekennzeichnet, dass** nach der Befüllung des ersten Bereiches der Kühlmittelkammer (10) mit Kühlmittel entstehendes Kühlmittelsublimat über die Öffnung (18) aus der Kühlmittelkammer (10) in die Ladungskammer (38) überführt wird.
